# EUROPEAN PATENT SPECIFICATION

(11) **EP 4 542 061 B1**
(45) Date of publication and mention of the grant of the patent: **29.07.2026**
(21) Application number: 24207103.3
(22) Date of filing: 17.10.2024
(51) Int. Cl.: F16B 2/10, F16B 7/04, F16B 21/06, F16B 21/16

(54) **QUICK RELEASE END POINT ATTACHMENT**
SCHNELL LÖSBARE ENDPUNKTBEFESTIGUNG
FIXATION DE POINT D'EXTRÉMITÉ À LIBÉRATION RAPIDE

(30) Priority: 19.10.2023 US 202318381675
(43) Date of publication of application: 23.04.2025
(73) Proprietor: Columbus McKinnon Corporation, Getzville, NY 14068 (US)
(72) Inventor: GODBEY, Jared Benjamin, MEADOWVIEW, VIRGINIA, 24361 (US)
(74) Representative: Roeb Diaz-Alvarez, Maria

(56) References cited:
- WO-A1-2021/074616

## Description

### TECHNICAL FIELD

The present invention relates generally to the field of material handling devices, and more particularly to a quick release end point attachment assembly.

### BACKGROUND ART

There is a need for a quick release endpoint attachment for connecting a material handling device such as a hoist or the like to suspension/rigging components such as, but not limited to, hooks, wire grips, eyelets, dynamometers, or the like.

Reference is made to the document WO 2021/074616 A1 (D1). The reference discloses a coupling with a receiver assembly with a retaining device that engages with a rod. The retaining device has annular protrusions on an interior wall, which receive and hold complimentary ridges on the exterior of the rod. An O-ring or spring can be used to bias the retaining device against the rod.

### BRIEF SUMMARY OF THE INVENTION

With parenthetical reference to the corresponding parts, portions or surfaces of the disclosed embodiment, merely for the purposes of illustration and not by way of limitation, the present invention meets the above described need by providing a quick release end point attachment assembly (10) according to claim 1.

The assembly (10) may include a first shaft (13) having a first groove (28), a second groove (31), and a third groove (97) defined therein.

A collar assembly (22) has a central opening (43) configured to receive the first shaft (13). The collar assembly (22) is configured to slide relative to the first shaft (13) in the direction of the longitudinal axis of the first shaft (13). The collar assembly (22) has an opening for receiving a locking pin (25). The opening (50) is configured such that when the collar assembly (22) is disposed in an open position the locking pin (25) can be inserted into the first groove (28) of the first shaft (13) to lock the collar assembly (22) relative to the first shaft (13) in the open position. The opening (50) is configured such that when the collar assembly (22) is disposed in a closed position the locking pin (25) can be inserted into the second groove (31) on the first shaft (13) to lock the collar assembly (22) relative to the first shaft (13) in the closed position.

A second shaft (19) has a first groove (103) defined therein. The second shaft (19) is configured to be arranged end-to-end relative to the first shaft (13).

One or more load carrying fingers (34) have a first end and a second end. The one or more load carrying fingers (34) are disposed between the first and second shafts (13, 19) and the collar assembly (22) when the first and second shafts (13, 19) are disposed in the end-to-end configuration. The one or more load carrying fingers (34) have an inner surface with two or more protrusions defined therein. The first protrusion (94) is configured to engage with the third groove (97) on the first shaft (13). The second protrusion (100) is configured to engage with the first groove (103) on the second shaft (19).

The collar assembly (22) has an internal profile (70) disposed on an inner surface of the collar assembly (22). The internal profile (70) is configured to engage with a mating profile on an outer surface of the one or more load carrying fingers (34).

When the collar assembly (22) is moved from the open to the closed position, the inside surface of the collar assembly (22) engages with the outside surface of the one or more load carrying fingers (34) to cause the first and second protrusions (94, 100) to engage with the grooves (97, 103) in the first and second shaft (13, 19) to prevent relative movement between the first and second shafts (13, 19). When the collar assembly (22) is moved from the closed to the open position, the collar assembly (22) moves relative to the one or more load carrying fingers (34) such that second protrusion (100) exits from the first groove (103) on the second shaft (19) releasing the second shaft (19) from the quick release end point attachment assembly (10).

In another aspect of the invention, the one or more load carrying fingers (34) have an outer surface with a groove (40) defined therein for receiving a garter spring (88).

In another aspect of the invention, the garter spring (88) engages with the groove (40) on the outer surface of the load carrying fingers (34) to hold the first protrusion (94) in the third groove (97) on the first shaft (13) during installation.

In another aspect of the invention, the second protrusion (100) on the one or more load carrying fingers (34) is biased in the open position.

### BRIEF DESCRIPTION OF THE DRAWINGS

FIG. 1 is a perspective view of the quick release endpoint attachment assembly of the present invention.
FIG. 2 is a perspective view of the assembly of FIG. 1 with the collar assembly removed for clarity.
FIG. 3 is a sectional elevation view of the quick release endpoint attachment assembly in the closed position.
FIG. 4 is a sectional elevation view of the quick release endpoint attachment assembly in the open position.

### DESCRIPTION OF THE PREFERRED EMBODIMENTS

At the outset, it should be clearly understood that like reference numerals are intended to identify the same structural elements, portions or surfaces consistently throughout the several drawing figures, as such elements, portions or surfaces may be further described or explained by the entire written specification, of which this detailed description is an integral part. Unless otherwise indicated, the drawings are intended to be read (e.g., cross-hatching, arrangement of parts, proportion, debris, etc.) together with the specification, and are to be considered a portion of the entire written description of this invention. As used in the following description, the terms "horizontal", "vertical", "left", "right", "up" and "down", as well as adjectival and adverbial derivatives thereof, (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or of rotation, as appropriate.

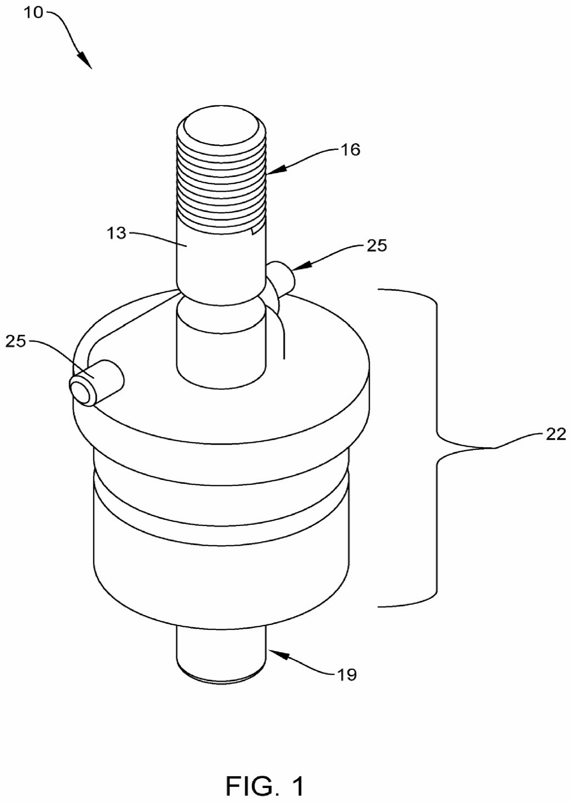

Referring now to the drawings, and more particularly to FIG. 1 thereof, this invention provides a quick release endpoint attachment assembly 10. The assembly 10 may include a first shaft 13 extending upward. The first shaft 13 may be connected to a material handling device such as a hoist or the like. The first shaft 13 may be provided with external threads 16 for engaging with the material handling device. A second shaft 19 extends downward from the bottom of the assembly 10 and may be configured to support suspension/rigging components such as, but not limited to, hooks, wire grips, eyelets, dynamometers, or the like.

A collar assembly 22 surrounds the junction of the first and second shafts 13, 19 as will be described in greater detail herein. The collar assembly 22 may include a channel for receiving a locking pin 25. The locking pin 25 may be configured to secure the assembly 10 in the open or closed position as described in greater detail below.

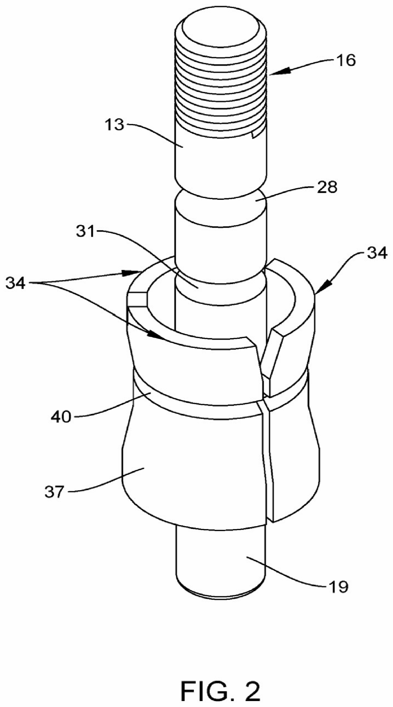

Turning to FIG. 2, the first shaft 13 is shown in greater detail with the collar assembly 22 removed for clarity. The first shaft 13 may be provided with a first groove 28 located below the threads 16. A second groove 31 may be provided below the first groove 28. As shown the grooves 28, 31 extend around the circumference of a cylindrical shaft. Below the second groove 31, one or more load carrying fingers 34 may be provided. The load carrying fingers 34 surround the first shaft 13 and the second shaft 19 and connect the shafts 13 and 19 together as described in greater detail below. The outer surface 37 of the load carrying finger 34 may be provided with a groove 40 disposed in a midportion of the load carrying finger 34.

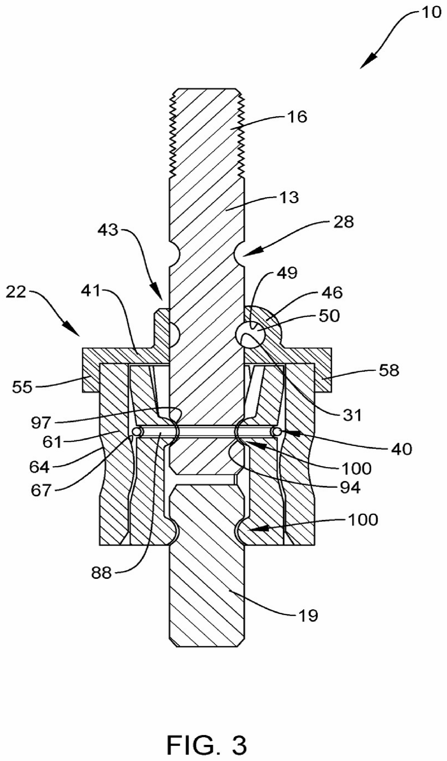

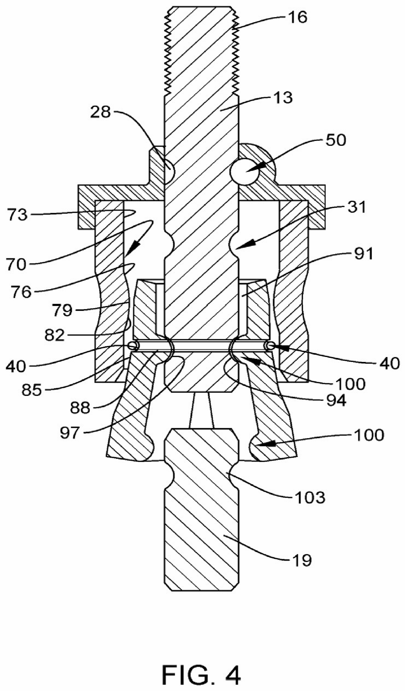

Turning to FIGS. 3 and 4, the quick release endpoint attachment assembly 10 is shown in the closed position. The collar assembly 22 may be provided with a top member 41 that has a central opening 43 that is configured to receive the first shaft 13. The top member 41 may also be formed with an extended portion 46 having a cylindrical channel 49 defined therein. As shown, the midportion of the extended portion 46 may have a cutaway section that intersects with the central opening 43. When the first shaft 13 is inserted through the central opening 43, the first or second grooves 28 and 31 can be brought into registry with the cylindrical channel 49 as shown. In the closed position, the second groove 31 is disposed in registry with the cylindrical channel 49 such that the locking pin 25 extends through both ends of the extended portion 46 and in the middle it extends through a round opening 50 formed by the second groove 31 and a portion of the cylindrical channel 49. When the first shaft 13 is inserted as shown in FIG. 3, the second groove 31 and the cylindrical channel 49 combine to form a circular opening 50. When the locking pin 25 is inserted through the opening 50, it is held in position between the wall of the shaft 13 forming the second groove 31 and the inner wall of the cylindrical channel 49 defining opening 50. In this position, the locking pin 25 prevents the collar assembly 22 from movement relative to the first shaft 13.

The locking pin 25 is positioned inside the cylindrical channel 49 formed in the top of the collar assembly 10. In the position shown, the channel 49 aligns with the second groove 31.

The top member 41 of the collar assembly 22 may be provided with a pair of opposed members 55, 58 extending downward at opposite ends of the top member 41. The top member 41 may support a downward extending round member 61 that has an outer surface 64 and an inner surface 67. The inner surface 67 has an internal profile 70 (FIG. 4) that is configured to engage with the one or more load carrying fingers 34 when the collar assembly 10 slides over the first and second shaft 13, 19. The profile 70 extends downward along a straight section 73. From the straight section 73, the profile 70 has an inward angled section 76. From an innermost point 79, the profile 70 has an outward angled section 82. The outward angled section 82 extends to another straight section 85. The innermost point 79 of the profile 70 engages with the outer surface 37 of the load carrying fingers 34.

The load carrying fingers 34 surround the first and second shafts 13 and 19. The groove 40 on the outer surface 37 of the load carrying fingers 34 is configured to receive a garter spring 88. The garter spring 88 is configured to provide an inward radial force to hold the load carrying fingers 34 in position during installation.

The load carrying fingers 34 have an inner surface 91 that engages with the first and second shafts 13 and 19. The inner surface 91 has a first protrusion 94 and a second protrusion 100. The first protrusion 94 is configured to align with a third groove 97 on the first shaft 13. The second protrusion 100 is configured to align with a first groove 103 disposed on the second shaft 19. The groove 40 on the outside of the load carrying fingers 34 may be aligned with the first protrusion 94. During installation, when the spring 88 is engaged around the load carrying fingers 34, the force of the spring 88 causes the first protrusion 94 to bear against the third groove 97 on the first shaft 13.

From the bottom of the spring 88 to the bottom of the load carrying fingers 34, the outer surface 37 of the load carrying fingers 34 is biased outward away from engagement with the first groove 103 disposed on the second shaft 19.

The profile 70 on the inner surface of the collar assembly 22 extends inward such that it bears against the outer surface 37 of the load carrying finger 34. In the closed position shown in FIG. 3, the bottom of the profile 70 on the collar assembly 22 engages with the bottom of the load carrying fingers 34 and causes the second protrusion 100 to bear against the first groove 103 disposed on the second shaft 19. When the collar assembly 22 is disposed around the load carrying fingers 34, it provides a radial force holding the load carrying fingers 34 against the shafts 13, 19.

With the collar assembly 22 in the position shown in FIG. 3, the assembly 10 is in the closed position and the second shaft 19 is securely connected to the assembly 10.

Turning to FIG. 4, with the pin 25 removed from the channel 49, the assembly 10 can be moved from the closed position of FIG. 3 to the open position of FIG. 4. As shown the collar assembly 22 has been slid upward such that the opening 50 in the cylindrical channel 49 aligns with the first groove 28 on the first shaft 13. In this position, the bottom of the collar assembly 22 has been moved upward relative to the end of the load carrying fingers 34. The load carrying fingers 34 remain in the same position under the radial force of the collar assembly 22 which causes the first protrusion 94 to remain engaged with the third groove 97 on the first shaft 13. With the inner profile 70 of the collar assembly 70 removed from engagement with the bottom of the load carrying fingers 34, the load carrying fingers 34 spread out at the bottom and move away from the second shaft 19. Accordingly, the second protrusions 100 exit from the first groove 103 disposed on the second shaft 19. With the second shaft 19 no longer engaged by the load carrying fingers 34, the second shaft 19 is released from the assembly 10. As a result, the second shaft 19 can be quickly replaced by another suspension/rigging component without the use of tools.

The present invention contemplates that many changes and modifications may be made. Therefore, while the presently-preferred form of the quick release endpoint attachment assembly has been shown and described, and several modifications and alternatives discussed, persons skilled in this art will readily appreciate that various additional changes and modifications may be made without departing from the scope of the invention, as defined and differentiated by the following claims.

## Claims

1. A quick release end point attachment assembly (10), comprising:
a first shaft (13) having at least one groove defined therein;
a collar assembly (22) having a central opening (43) configured to receive the first shaft (13), the collar assembly (22) configured to slide relative to the first shaft (13) in the direction of a longitudinal axis of the first shaft (13);
a second shaft (19) having at least one groove defined therein, the second shaft (19) configured to be arranged end-to-end relative to the first shaft (13); one or more load carrying fingers (34) having a first end and a second end, the one or more load carrying fingers (34) disposed between the first and/or second shafts (13, 19) and the collar assembly (22), the one or more load carrying fingers (34) having an inner surface (91) with two or more protrusions defined therein, the first protrusion (94) configured to engage with the at least one groove on the first shaft (13), the second protrusion (100) configured to engage with the at least one groove on the second shaft (19);
wherein the collar assembly (22) has an internal profile (70) disposed on an inner surface (67) of the collar assembly (22), the internal profile (67) configured to engage with a mating profile on an outer surface (37) of the one or more load carrying fingers (34);
wherein when the collar assembly (22) is moved in the direction of the longitudinal axis of the first shaft (13) from the open to the closed position, the inner surface (67) of the collar assembly (22) engages with the outer surface (37) of the one or more load carrying fingers (34) to cause the first and second protrusions (94, 100) to engage with the grooves in the first and second shaft (13, 19) to prevent relative movement between the first and second shafts (13, 19) and when the collar assembly (22) is moved in the direction of the longitudinal axis of the first shaft (13) from the closed to the open position, the collar assembly (22) moves relative to the one or more load carrying fingers (34) such that second protrusion (100) exits from the first groove on the second shaft (19) releasing the second shaft (19) from the quick release end point attachment assembly (10).

2. The assembly (10) of claim 1, wherein:
the first shaft (13) having a first groove (28), a second groove (31), and a third groove (97) defined therein; and,
the first protrusion (94) is configured to engage with the third groove (97) on the first shaft (13) and the second protrusion (100) is configured to engage with the first groove (103) on the second shaft (19).

3. The assembly (10) set forth in claim 2, the one or more load carrying fingers (34) having an outer surface (37) with a groove (40) defined therein for receiving a garter spring (88).

4. The assembly (10) set forth in claim 3, wherein the garter spring (88) engages with the groove (40) on the outer surface (37) of the load carrying fingers (34) to hold the first protrusion (94) in the third groove (97) on the first shaft (13) during installation.

5. The assembly (10) set forth in claim 1, wherein the second protrusion (100) on the one or more load carrying fingers (34) is biased in the open position.

6. The assembly (10) set forth in claim 2, wherein the collar assembly (22) has an opening (50) defined therein for receiving a locking pin (25), the opening (50) configured such that when the collar assembly (22) is disposed in an open position the locking pin (25) can be inserted through the opening (50) in the collar assembly (22) into the first groove (28) of the first shaft (13) to lock the collar assembly (22) relative to the first shaft (13) in the open position and the opening configured such that when the collar assembly (22) is disposed in a closed position the locking pin (25) can be inserted through the opening (50) in the collar assembly (22) into the second groove (31) on the first shaft (13) to lock the collar assembly (22) relative to the first shaft (13) in the closed position.

7. The assembly (10) set forth in claim 1, wherein the first and second shafts (13, 19) are disposed in an end-to-end configuration.

8. The assembly (10) set forth in claim 1, wherein the first shaft (13) is cylindrical.

9. The assembly (10) set forth in claim 1, wherein the second shaft (19) is cylindrical.

10. The assembly (10) set forth in claim 1, wherein the first shaft (13) has a threaded section.

11. The assembly (10) set forth in claim 1, wherein the second end of the load carrying fingers (34) is biased in an open position.

12. The assembly (10) set forth in claim 1, wherein the collar assembly (22) has a top member (41) with a shoulder formed therein for receiving a downward extending member (61).

13. The assembly (10) set forth in claim 11, wherein the downward extending member (61) has an inner surface (67) with a profile (70) having at least one section extending inward (76) toward the load carrying fingers (34) when the collar assembly (22) is installed on the shafts (13, 19).

14. The assembly (10) set forth in claim 6, the one or more load carrying fingers (34) having an outer surface (37) with a groove (40) defined therein for receiving a garter spring (88).

15. The assembly (10) set forth in claim 14, wherein the garter spring (88) engages with the groove (40) on the outer surface (37) of the load carrying fingers (34) to hold the first protrusion (94) in the third groove (97) on the first shaft (13) during installation.

16. The assembly set forth in claim 6, wherein the second protrusion (100) on the one or more load carrying fingers (34) is biased in the open position.

## Patentansprüche

1. Schnellverschluss-Endpunktbefestigungsbaugruppe (10), umfassend:
eine erste Welle (13) mit mindestens einer darin definierten Nut;
eine Kragenbaugruppe (22) mit einer zentralen Öffnung (43), die dazu konfiguriert ist, die erste Welle (13) aufzunehmen, wobei die Kragenbaugruppe (22) dazu konfiguriert ist, relativ zur ersten Welle (13) in Richtung einer Längsachse der ersten Welle (13) zu gleiten;
eine zweite Welle (19) mit mindestens einer darin definierten Nut, wobei die zweite Welle (19) dazu konfiguriert ist, Ende an Ende relativ zur ersten Welle (13) angeordnet zu werden; einen oder mehrere Lasttragfinger (34) mit einem ersten Ende und einem zweiten Ende, wobei der eine oder die mehreren Lasttragfinger (34) zwischen der ersten und/oder der zweiten Welle (13, 19) und der Kragenbaugruppe (22) angeordnet sind, wobei der eine oder die mehreren Lasttragfinger (34) eine innere Oberfläche (91) mit zwei oder mehr darin definierten Vorsprüngen aufweisen, wobei der erste Vorsprung (94) dazu konfiguriert ist, in die mindestens eine Nut an der ersten Welle (13) einzugreifen, und der zweite Vorsprung (100) dazu konfiguriert ist, in die mindestens eine Nut an der zweiten Welle (19) einzugreifen;
wobei die Kragenbaugruppe (22) ein Innenprofil (70) aufweist, das an einer inneren Oberfläche (67) der Kragenbaugruppe (22) angeordnet ist, wobei das Innenprofil (67) dazu konfiguriert ist, in ein passendes Profil an einer äußeren Oberfläche (37) des einen oder der mehreren Lasttragfinger (34) einzugreifen;
wobei, wenn die Kragenbaugruppe (22) in Richtung der Längsachse der ersten Welle (13) von der offenen in die geschlossene Position bewegt wird, die innere Oberfläche (67) der Kragenbaugruppe (22) in die äußere Oberfläche (37) des einen oder der mehreren Lasttragfinger (34) eingreift, um zu bewirken, dass der erste und der zweite Vorsprung (94, 100) in die Nuten in der ersten und der zweiten Welle (13, 19) eingreifen, um eine Relativbewegung zwischen der ersten und der zweiten Welle (13, 19) zu verhindern; und wenn die Kragenbaugruppe (22) in Richtung der Längsachse der ersten Welle (13) von der geschlossenen in die offene Position bewegt wird, bewegt sich die Kragenbaugruppe (22) relativ zu dem einen oder den mehreren Lasttragfingern (34) derart, dass der zweite Vorsprung (100) aus der ersten Nut an der zweiten Welle (19) austritt, wobei die zweite Welle (19) aus der Schnellverschluss-Endpunktbefestigungsbaugruppe (10) freigegeben wird.

2. Baugruppe (10) nach Anspruch 1, wobei:
die erste Welle (13) eine erste Nut (28), eine zweite Nut (31) und eine dritte Nut (97) aufweist, die darin definiert sind; und
der erste Vorsprung (94) dazu konfiguriert ist, in die dritte Nut (97) an der ersten Welle (13) einzugreifen, und der zweite Vorsprung (100) dazu konfiguriert ist, in die erste Nut (103) an der zweiten Welle (19) einzugreifen.

3. Baugruppe (10) nach Anspruch 2, wobei der eine oder die mehreren Lasttragfinger (34) eine äußere Oberfläche (37) mit einer darin definierten Nut (40) aufweisen, um eine Rundfeder (88) aufzunehmen.

4. Baugruppe (10) nach Anspruch 3, wobei die Rundfeder (88) in die Nut (40) an der äußeren Oberfläche (37) der Lasttragfinger (34) eingreift, um den ersten Vorsprung (94) während der Installation in der dritten Nut (97) an der ersten Welle (13) zu halten.

5. Baugruppe (10) nach Anspruch 1, wobei der zweite Vorsprung (100) an dem einen oder den mehreren Lasttragfingern (34) in die offene Position vorgespannt ist.

6. Baugruppe (10) nach Anspruch 2, wobei die Kragenbaugruppe (22) eine darin definierte Öffnung (50) zum Aufnehmen eines Verriegelungsstifts (25) aufweist, wobei die Öffnung (50) dazu konfiguriert ist, dass, wenn die Kragenbaugruppe (22) in einer offenen Position angeordnet ist, der Verriegelungsstift (25) durch die Öffnung (50) in der Kragenbaugruppe (22) in die erste Nut (28) der ersten Welle (13) eingeführt werden kann, um die Kragenbaugruppe (22) relativ zur ersten Welle (13) in der offenen Position zu verriegeln, und die Öffnung dazu konfiguriert ist, dass, wenn sich die Kragenbaugruppe (22) in einer geschlossenen Position befindet, der Verriegelungsstift (25) durch die Öffnung (50) in der Kragenbaugruppe (22) in die zweite Nut (31) an der ersten Welle (13) eingeführt werden kann, um die Kragenbaugruppe (22) relativ zur ersten Welle (13) in der geschlossenen Position zu verriegeln.

7. Baugruppe (10) nach Anspruch 1, wobei die erste und die zweite Welle (13, 19) in einer Ende-an-Ende-Konfiguration angeordnet sind.

8. Baugruppe (10) nach Anspruch 1, wobei die erste Welle (13) zylindrisch ist.

9. Baugruppe (10) nach Anspruch 1, wobei die zweite Welle (19) zylindrisch ist.

10. Baugruppe (10) nach Anspruch 1, wobei die erste Welle (13) einen Gewindeabschnitt aufweist.

11. Baugruppe (10) nach Anspruch 1, wobei das zweite Ende der Lasttragfinger (34) in eine offene Position vorgespannt ist.

12. Baugruppe (10) nach Anspruch 1, wobei die Kragenbaugruppe (22) ein oberes Element (41) mit einer darin ausgebildeten Schulter zum Aufnehmen eines sich nach unten erstreckenden Elements (61) aufweist.

13. Baugruppe (10) nach Anspruch 11, wobei das sich nach unten erstreckende Element (61) eine innere Oberfläche (67) mit einem Profil (70) aufweist, das mindestens einen Abschnitt (76) aufweist, der sich nach innen zu den Lasttragfingern (34) erstreckt, wenn die Kragenbaugruppe (22) auf den Wellen (13, 19) installiert ist.

14. Baugruppe (10) nach Anspruch 6, wobei der eine oder die mehreren Lasttragfinger (34) eine äußere Oberfläche (37) mit einer darin definierten Nut (40) aufweisen, um eine Rundfeder (88) aufzunehmen.

15. Baugruppe (10) nach Anspruch 14, wobei die Rundfeder (88) in die Nut (40) an der äußeren Oberfläche (37) der Lasttragfinger (34) eingreift, um den ersten Vorsprung (94) während der Installation in der dritten Nut (97) an der ersten Welle (13) zu halten.

16. Baugruppe nach Anspruch 6, wobei der zweite Vorsprung (100) an dem einen oder den mehreren Lasttragfingern (34) in die offene Position vorgespannt ist.

## Revendications

1. Ensemble de fixation d'extrémité à libération rapide (10), comprenant :
un premier arbre (13) ayant au moins une rainure définie dans celui-ci ;
un ensemble collier (22) ayant une ouverture centrale (43) conçue pour recevoir le premier arbre (13), l'ensemble collier (22) étant conçu pour coulisser relativement au premier arbre (13) dans la direction d'un axe longitudinal du premier arbre (13) ;
un second arbre (19) ayant au moins une rainure définie dans celui-ci, le second arbre (19) étant conçu pour être agencé bout à bout relativement au premier arbre (13) ; un ou plusieurs doigts porteurs de charge (34) ayant une première extrémité et une seconde extrémité, le ou les doigts porteurs de charge (34) étant disposés entre le premier et/ou le second arbre (13, 19) et l'ensemble collier (22), le ou les doigts porteurs de charge (34) ayant une surface intérieure (91) avec deux ou plusieurs saillies définies dans celle-ci, la première saillie (94) étant conçue pour venir en prise avec l'au moins une rainure sur le premier arbre (13), la seconde saillie (100) étant conçue pour venir en prise avec l'au moins une rainure sur le second arbre (19) ;
dans lequel l'ensemble collier (22) a un profil interne (70) disposé sur une surface intérieure (67) de l'ensemble collier (22), le profil interne (67) étant conçu pour venir en prise avec un profil d'accouplement sur une surface extérieure (37) du ou des doigts porteurs de charge (34) ;
dans lequel lorsque l'ensemble collier (22) est mû dans la direction de l'axe longitudinal du premier arbre (13) de la position ouverte à la position fermée, la surface intérieure (67) de l'ensemble collier (22) vient en prise avec la surface extérieure (37) du ou des doigts porteurs de charge (34) pour amener les première et seconde saillies (94, 100) à venir en prise avec les rainures dans les premier et second arbres (13, 19) pour empêcher un mouvement relatif entre les premier et second arbres (13, 19) et, lorsque l'ensemble collier (22) est mû dans la direction de l'axe longitudinal du premier arbre (13) de la position fermée à la position ouverte, l'ensemble collier (22) se meut relativement au ou aux doigts porteurs de charge (34) de telle sorte que la seconde saillie (100) sorte de la première rainure sur le second arbre (19) en libérant le second arbre (19) de l'ensemble de fixation d'extrémité à libération rapide (10).

2. Ensemble (10) selon la revendication 1, dans lequel :
le premier arbre (13) ayant une première rainure (28), une deuxième rainure (31), et une troisième rainure (97) définies dans celui-ci ; et,
la première saillie (94) est conçue pour venir en prise avec la troisième rainure (97) sur le premier arbre (13) et la seconde saillie (100) est conçue pour venir en prise avec la première rainure (103) sur le second arbre (19).

3. Ensemble (10) tel qu'énoncé dans la revendication 2, le ou les doigts porteurs de charge (34) ayant une surface extérieure (37) avec une rainure (40) définie dans celle-ci pour la réception d'un ressort jarretière (88).

4. Ensemble (10) tel qu'énoncé dans la revendication 3, dans lequel le ressort jarretière (88) vient en prise avec la rainure (40) sur la surface extérieure (37) des doigts porteurs (34) pour maintenir la première saillie (94) dans la troisième rainure (97) sur le premier arbre (13) pendant l'installation.

5. Ensemble (10) tel qu'énoncé dans la revendication 1, dans lequel la seconde saillie (100) sur le ou les doigts porteurs de charge (34) est sollicitée dans la position ouverte.

6. Ensemble (10) tel qu'énoncé dans la revendication 2, dans lequel l'ensemble collier (22) a une ouverture (50) définie dans celui-ci pour la réception d'une goupille de verrouillage (25), l'ouverture (50) étant conçue de telle sorte que lorsque l'ensemble collier (22) est disposé dans une position ouverte, la goupille de verrouillage (25) peut être insérée à travers l'ouverture (50) de l'ensemble collier (22) dans la première rainure (28) du premier arbre (13) pour verrouiller l'ensemble collier (22) relativement au premier arbre (13) dans la position ouverte, et l'ouverture étant conçue de telle sorte que lorsque l'ensemble collier (22) est disposé dans une position fermée, la goupille de verrouillage (25) peut être insérée à travers l'ouverture (50) dans l'ensemble collier (22) dans la deuxième rainure (31) du premier arbre (13) pour verrouiller l'ensemble collier (22) relativement au premier arbre (13) dans la position fermée.

7. Ensemble (10) tel qu'énoncé dans la revendication 1, dans lequel le premier et le second arbre (13, 19) sont disposés dans une configuration bout à bout.

8. Ensemble (10) tel qu'énoncé dans la revendication 1, dans lequel le premier arbre (13) est cylindrique.

9. Ensemble (10) tel qu'énoncé dans la revendication 1, dans lequel le second arbre (19) est cylindrique.

10. Ensemble (10) tel qu'énoncé dans la revendication 1, dans lequel le premier arbre (13) a une section filetée.

11. Ensemble (10) tel qu'énoncé dans la revendication 1, dans lequel la seconde extrémité des doigts porteurs de charge (34) est sollicitée dans une position ouverte.

12. Ensemble (10) tel qu'énoncé dans la revendication 1, dans lequel l'ensemble de collier (22) q un élément supérieur (41) avec un épaulement formé dans celui-ci pour la réception d'un élément s'étendant vers le bas (61).

13. Ensemble (10) tel qu'énoncé dans la revendication 11, dans lequel l'élément s'étendant vers le bas (61) a une surface intérieure (67) avec un profil (70) ayant au moins une section s'étendant vers l'intérieur (76) vers les doigts porteurs de charge (34) lorsque l'ensemble de collier (22) est installé sur les arbres (13, 19).

14. Ensemble (10) tel qu'énoncé dans la revendication 6, le ou les doigts porteurs de charge (34) ayant une surface extérieure (37) avec une rainure (40) définie dans celle-ci pour la réception d'un ressort jarretière (88).

15. Ensemble (10) tel qu'énoncé dans la revendication 14, dans lequel le ressort jarretière (88) vient en prise avec la rainure (40) sur la surface extérieure (37) des doigts porteurs (34) pour maintenir la première saillie (94) dans la troisième rainure (97) sur le premier arbre (13) pendant l'installation.

16. Ensemble selon la revendication 6, dans lequel la seconde saillie (100) sur le ou les doigts porteurs de charge (34) est sollicitée dans la position ouverte.
